Europäisches Patentamt

(19) European Patent Office

Office européen des brevets

(11) Numéro de publication: **0 258 131**
**B1**

(12) **FASCICULE DE BREVET EUROPEEN**

(45) Date de publication du fascicule du brevet: **16.01.91**

(51) Int. Cl.⁵: **G 21 C 15/18**

(21) Numéro de dépôt: **87401865.8**

(22) Date de dépôt: **10.08.87**

(54) **Dispositif de refroidissement de secours d'un réacteur nulcléaire à neutrons rapides.**

(30) Priorité: **20.08.86 FR 8611892**

(43) Date de publication de la demande:
**02.03.88 Bulletin 88/09**

(45) Mention de la délivrance du brevet:
**16.01.91 Bulletin 91/03**

(84) Etats contractants désignés:
**DE GB IT NL**

(56) Documents cités:
**FR-A-2 506 498**
**FR-A-2 555 794**
**US-A-4 367 194**

(73) Titulaire: **FRAMATOME**
**Tour Fiat 1, Place de la Coupole**
**F-92400 Courbevoie (FR)**

(72) Inventeur: **Thevenin, Michel**
**11 allée du Mali**
**F-94260 Fresnes (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

**Description**

L'invention concerne un dispositif de refroidissement de secours d'un réacteur nucléaire à neutrons rapides de type intégré.

Les réacteurs nucléaires à neutrons rapides de type intégré comportent une cuve principale contenant du métal liquide, tel que du sodium, constituant le fluide de refroidissement du réacteur nucléaire dans lequel est plongé le coeur du réacteur constitué par des assemblages combustibles. La cuve principale du réacteur est partagée intérieurement en deux zones, par une structure complexe constituant la cuve interne du réacteur. Cette structure complexe est équivalente à une paroi dont une partie appelée redan, s'étend radialement par rapport à la cuve principale.

Les deux zones délimitées par la cuve interne sont disposées, pour l'une, essentiellement à la partie supérieure de la cuve, et pour l'autre, à la partie inférieure. La zone supérieure, appelée collecteur chaud, communique avec la sortie du coeur et reçoit le métal liquide chaud ayant traversé les assemblages combustibles du coeur. La zone inférieure, appelée collecteur froid, reçoit le sodium refroidi dans les échangeurs intermédiaires plongés dans la cuve principale du réacteur. Ce métal liquide refroidi est ensuite renvoyé, à partir du collecteur froid, à la partie inférieure des assemblages du coeur.

Lorsqu'un réacteur nucléaire a fonctionné pendant un certain temps, il continue à dégager une puissance résiduelle non négligeable, lorsqu'il est mis à l'arrêt, c'est-à-dire lorsqu'on introduit les barres de commande du réacteur, à l'intérieur du coeur, dans leur position d'insertion maximale. Il est donc nécessaire d'évacuer la puissance résiduelle du réacteur pour ne pas endommager les composants et structures internes, par un élévation de température excessive.

Cette possibilité d'évacuer la puissance résiduelle du réacteur doit être maintenue, même si le réacteur a subi des avaries importantes et si les circuits principaux d'évacuation de puissance qui sont mis en oeuvre pendant la marche normale du réacteur sont hors d'état de fonctionner.

On fait donc appel à des circuits de secours qui ne sont utilisés que lorsque le réacteur est à l'arrêt et lorsque les circuits principaux sont hors d'état de fonctionner.

Dans le cas des réacteurs nucléaires à neutrons rapides refroidis par du sodium liquide et de type intégré, on utilise des échangeurs de chaleur de secours plongés dans la cuve du réacteur, à l'intérieur du collecteur chaud. Ces échangeurs de chaleur de secours dans lesquels circule le sodium liquide de refroidissement du réacteur, sont associés à des échangeurs de chaleur du type sodium-air, disposés à l'extérieur de la cuve du réacteur et assurant le refroidissement de sodium liquide secondaire qui s'est échauffé, par mise en contact thermique avec le sodium primaire de refroidissement du réacteur traversant l'échangeur plongé dans la cuve. Ces échangeurs de secours, associés à des échangeurs sodium-air, constituent des circuits totalement indépendant des circuits principaux.

Les échangeurs de secours, qui plongent directement dans le collecteur chaud de la cuve, comportent des ouvertures d'entrée du sodium à refroidir à leur partie supérieure et des ouvertures de sortie de sodium refroidi, dans leur partie inférieure. Le sodium refroidi est donc réintroduit dans le collecteur chaud et doit emprunter un parcours compliqué pour passer dans le collecteur froid et, de là, revenir à la partie inférieure ou pied des assemblages combustibles. Ce parcours complexe comporte les passages de pompes et les corps des échangeurs intermédiaires des circuits principaux d'évacuation de puissance. Il en résulte des pertes de charge assez importantes, une efficacité moindre du dispositif de refroidissement de secours du réacteur et des dissymétries de température importantes dans le collecteur chaud entraînant des contraintes thermiques supplémentaires sur le redan.

On connaît, par le FR—A—2.555.794, un dispositif de refroidissement de secours comportant un échangeur de chaleur auxiliaire suspendu à la dalle du réacteur et traversant la cuve interne, de manière que la partie supérieure de l'échangeur comprenant des ouvertures d'entrée du métal liquide de refroidissement du réacteur soit située à l'intérieur de la cuve interne, dans le métal liquide chaud. La partie inférieure de l'échangeur par laquelle sort le métal liquide refroidi dans l'échangeur est reliée par une conduite au sommier d'alimentation du coeur. Un clapet disposé dans la conduite et normalement fermé sous l'effet de la pression dans le sommier s'ouvre sous l'effet d'une chute de pression due à l'arrêt des pompes primaires, de manière à mettre l'échangeur de secours en service.

Un tel dispositif comportant un organe mobile à l'intérieur d'un conduit plongé dans le metal liquide de refroidissement du réacteur n'est pas d'un fonctionnement très sûr et ne peut pas être facilement contrôlé ou réparé.

De plus, on ne dispose pas de moyens de commande susceptibles d'actionner le clapet à distance.

Le but de l'invention est donc de proposer un réacteur nucléaire à neutrons rapides de type intégré ayant une cuve principale contenant du métal liquide dans lequel est plongé le coeur du réacteur et comportant une paroi séparant le volume interne de la cuve en une zone supérieure recevant le métal liquide chaud ayant traversé le coeur du réacteur, appelée collecteur chaud, et une zone inférieure recevant du métal liquide refroidi, appelée collecteur froid, cette paroi comportant une partie s'étendant dans la direction radiale de la cuve appelée redan, le réaction étant pourvu d'un dispositif de refroidissement de secours comportant au moins un échangeur de chaleur plongé dans le collecteur chaud et présentant des ouvertures de sortie de métal liquide refroidi à sa partie inférieure et une virole fixée sur l'enveloppe de l'échangeur de chaleur, au-dessus des ouvertures de sortie du métal liquide, dispositif qui soit d'une grande efficacité et d'une grande simplicité de mise en oeuvre et qui puisse être actionné à distance.

Dans ce but, le dispositif de refroidissement suivant l'invention comporte en outre:

—un conduit tubulaire sensiblement vertical traversant le redan à la verticale de l'échangeur, dont l'extrémité inférieure débouche dans le collecteur froid et dont l'extrémité supérieure débouche dans le collecteur chaud, en-dessous de la partie inférieure de l'échangeur;

—une cloche fixée sur l'échangeur de chaleur, dans le prolongement de sa partie inférieure, ouverte vers le bas et disposée de façon à coiffer la partie supérieure du conduit tout en ménageant un espace libre autour de cette partie supérieure, la virole étant prolongée vers le bas, de manière à entourer la cloche sur une partie au moins de sa hauteur et la partie supérieure du conduit tubulaire; et

—des moyens de mise en pression de gaz neutre et de dépressurisation du volume intérieur de la cloche permettant de séparer complètement le métal liquide du collecteur chaud, du métal liquide du collecteur froid, par du gaz neutre sous pression, ou de mettre en communication la sortie du métal liquide refroidi de l'échangeur de chaleur, avec le collecteur froid, par l'intermédiaire de la cloche et du conduit.

Afin de bien faire comprendre l'invention, on va maintenant décrire, à titre d'exemple non limitatif, en se référent aux figures jointes en annexe, un mode de réalisation d'un dispositif de refroidissement selon l'invention, utilisé dans un réacteur nucléaire à neutrons rapides refroidi par du sodium liquide.

—La Fig. 1 est une vue en élévation avec coupe partielle du dispositif de refroidissement en position dans la cuve du réacteur nucléaire, pendant le fonctionnement normal du réacteur.

—La Fig. 2 est une vue en élévation avec coupe partielle du dispositif de refroidissement en position dans la cuve du réacteur nucléaire, pendant une phase d'arrêt du réacteur, avec mise en fonctionnement du refroidissement de secours.

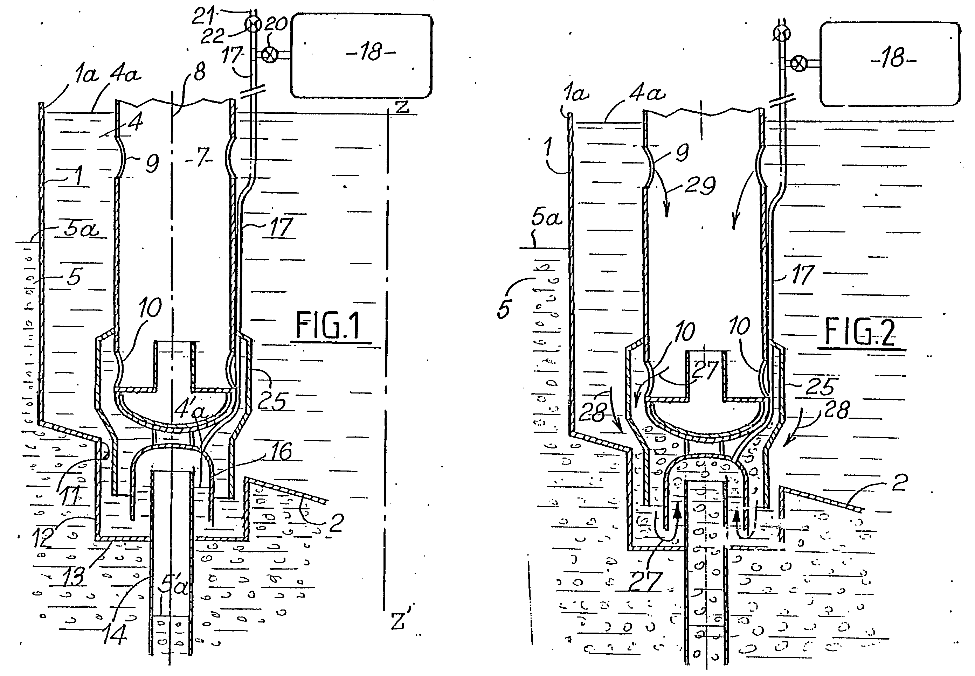

Sur les Fig. 1 et 2, on voit la cuve interne 1 d'un réacteur nucléaire à neutraons rapides constituée par des viroles cylindriques à axe vertical telles que 1a et par un redan tronconique 2, délimitant à l'intérieur de la cuve du réacteur, un collecteur chaud 4 et un collecteur froid 5.

Les viroles cylindriques de la cuve interne 1 sont soit des viroles ayant pour axe l'axe Z—Z' de la cuve (Fig. 1), soit des viroles de passage des échangeurs intermédiaires et des pompes à travers le redan 2.

La cuve interne est représentée sur les Fig. 1 et 2 sous la forme d'une simple paroi, pour éviter de compliquer la description, mais cette cuve est généralement d'une structure plus complexe; cette structure est toutefois équivalente dans sa fonction de séparation du collecteur chaud et du collecteur froid, à une simple paroi telle que représentée.

La partie du redan 2 représentée sur les Fig. 1 et 2 est de forme tronconique et s'étend dans la direction radiale de la cuve principale du réacteur dont on a représenté l'axe de symétrie de révolution Z—Z' sur la Fig. 1.

On voit que le collecteur chaud 4, situé au-dessus du redan 2 est à un niveau généralement supérieur au niveau du collecteur froid 5 situé au-dessous du redan 2. La forme et la structure du redan assurent une mise en communication du collecteur chaud 4 avec la sortie du coeur, c'est-à-dire avec sa partie supérieure dans laquelle se trouvent les têtes d'assemblage. Le collecteur chaud 4 recueille ainsi le sodium qui s'est échauffé dans le coeur, en circulant de bas en haut au contact des assemblages combustibles. On a représenté le niveau supérieur 4a du sodium chaud dans le collecteur 4, ce niveau étant sensiblement constant lorsque les paramètres de fonctionnement du réacteur restent eux-mêmes constants. Ce niveau est cependant un niveau dynamique qui s'établit lors de la circulation du sodium qui sera décrite ci-dessous.

Le collecteur froid 5 est en communication avec la partie inférieure du coeur correspondant aux pieds des assemblages dans lesquels est injecté le sodium refroidi dont le niveau s'établit en 5a pendant le fonctionnement du réacteur.

Les échangeurs intermédiaires et les pompes du réacteur constituant les éléments du circuit de refroidissement normal du réacteur traversent le redan 2, par l'intermédiaire de dispositifs de traversée permettant de séparer le sodium chaud du collecteur 4, du sodium refroidi du collecteur 5. Les échangeurs de chaleur intermédiaires comportent des ouies d'entrée à leur partie supérieure dans le collecteur chaud, et des ouïes de sortie, à leur partie inférieure, dans le collecteur froid. Le sodium chaud du collecteur 4 pénètre dans les échangeurs intermédiaires dans lesquels il est refroidi par du sodium secondaire, la chaleur prélevée par ce sodium secondaire étant utilisée pour vaporiser de l'eau dans les générateurs de vapeur situés à l'extérieur de la cuve du réacteur. Le sodium refroidi à la sortie des échangeurs intermédiaires est recueilli dans le collecteur froid 5 et injecté, grâce aux pompes, à la partie inférieure du coeur. Ce sodium refroidi traverse le coeur de bas en haut en s'échauffant, avant de revenir dans le collecteur chaud 4.

Sur les Fig. 1 et 2, on voit un échangeur de secours 7 plongé dans le sodium du collecteur chaud 4 comportant des ouvertures d'entrée de sodium 9 dans sa partie supérieure et des ouvertures de sortie de sodium 10 dans sa partie inférieure. Un échangeur de secours tel que l'échangeur 7 est bien connu de la technique antérieure et comporte, à l'intérieur de son enveloppe externe plongeant dans le sodium liquide de la cuve, un faisceau de tubes parcours intérieurement par du sodium liquide, permettant de prélever la chaleur du sodium liquide primaire pénétrant dans l'enveloppe de l'échangeur 7 par les ouvertures 9. Le sodium primaire ressortant par les ouvertures 10, lorsque l'échangeur de chaleur 7 est en fonctionnement, a donc subi un refroidissement.

Le sodium liquide parcourant les tubes du faisceau de l'échangeur 7 est à son tour refroidi, à l'extérieur de la cuve, dans un échangeur sodium-air, l'ensemble de l'échangeur de chaleur 7, de l'échangeur sodium-air et de leur tuyauterie de raccordement constituant un dispositif de refroidissement suivant l'art antérieur. Ce dispositif de refroidissement est mis en oeuvre lorsque le réacteur nucléaire est à l'arrêt, pour prélever la chaleur résiduelle de ce réacteur. Ainsi qu'il est visible sur les Fig. 1 et 2, pour la mise en oeuvre de l'invention, le redan 2 est percé d'une ouverture 11 centrée sur l'axe 8 de l'échangeur 7. Une virole cylindrique 12 dont le diamètre est supérieur au diamètre de l'échangeur 7 est fixée au redan 2, par soudure, le long du contour de l'ouverture 11. Cette virole pénètre sur une certaine hauteur à l'intérieur du collecteur froid 5, un fond annulaire 13 étant fixé par soudage à sont extrémité inférieure. Un conduit tubulaire vertical 14 est fixé le long de l'ouverture centrale du fond 13 centrée sur l'axe 8 de l'échangeur 7. Le conduit tubulaire 14 est coaxial à l'enveloppe de l'échangeur 7. L'extrémité inférieure du conduit vertical 14 se trouve dans le collecteur froid 5 et l'extrémité supérieure de ce conduit, dans le collecteur chaud 4, un peu en-dessous de l'extrémité inférieure de l'enveloppe de l'échangeur 7. Une cloche 16 ouverte vers le bas est fixée à l'extrémité inférieure de l'enveloppe de l'échangeur 7, dans le prolongement vertical de cette enveloppe. Lorsque l'échangeur 7 est en place dans la cuve du réacteur, la cloche 16 vient coiffer l'extrémité supérieure du tube 14; cette cloche 16 ayant une section transversale de dimension supérieure à celle du conduit 14 ménage un espace libre tout autour de l'extrémité supérieure du conduit 14. L'extrémité supérieure du conduit 14 débouche donc, à l'intérieur du collecteur chaud 4, sous la cloche 16, à une certain distance axiale en-dessous de sa surface interne supérieure. La cloche 16 est reliée par un tube 17 fixé le long de l'enveloppe de l'échangeur 7, à un réservoir d'argon sous pression 18 disposé à l'extérieur de la cuve du réacteur nucléaire. Le réservoir 18 est équipé d'une vanne d'arrêt ou robinet 20 permettant d'envoyer de l'argon dans la canalisation 17 et dans la cloche 16 ou d'isoler la canalisation et la cloche par rapport au réservoir 18. Un tube d'échappement 21 relié au circuit d'effluent basse pression est également disposé en dérivation sur le tube 17, en amont du réservoir 18, ce tube d'échappement 21 étant équipé d'une vanne 22.

Sur l'enveloppe de l'échangeur 7, est fixé, à un niveau supérieur au niveau des ouvertures 10 de sortie de sodium refroidi, une virole 25 dont l'extrémité supérieure entoure la partie inférieure de l'enveloppe de l'échangeur 7 et dont l'extrémité inférieure de plus faible diamètre que la partie supérieure pénètre dans l'espace ménagé par la virole 12. La virole 25 a, dans sa partie inférieure, un diamètre qui n'est que légèrement inférieur au diamètre de la virole 12 ménageant un jeu faible entre les viroles 12 et 25.

Sur la Fig. 1, le dispositif de refroidissement a été représenté dans une phase de fonctionnement normale du réacteur l'échangeur de secours 7 étant àl l'arrêt. Dans cette phase de fonctionnement normale du réacteur, la cloche 16 et le conduit tubulaire vertical 14 renferment de l'argon sous pression provenant du réservoir 18. Cet argon est à une pression suffisante pour maintenir un niveau de sodium liquide chaud 4'a dans la cloche 16 et un niveau de sodium liquide refroidi 5'a dans le tube 14. L'argon constitue ainsi, dans la partie supérieure du conduit 14 et dans la cloche 16, un bouchon gazeux isolant totalement le sodium chaud contenu dans le collecteur 4 du sodium refroidi contenu dans le collecteur 5. La circulation du sodium liquide dans la cuve du réacteur nucléaire est alors identique à la circulation du sodium dans une cuve dont le redan n'est pas traversé par un conduit tel que le conduit 14.

Comme il est visible sur la Fig. 2, lorsque le réacteur nucléaire est à l'arrêt et que le dispositif de refroidissement est mis en fonctionnement, l'argon précédemment contenu dans le conduit 14 et la cloche 16 est évacué, le conduit et la cloche étant alors remplis de métal liquide. Pour réaliser cette évacuation du conduit et de la cloche, on relie le tube d'échappement 21 avec le circuit d'effluents basse pression, la vanne 20 étant fermée. On assure ainsi la mise en communication du collecteur chaud 4 avec le collecteur froid 5, par l'intermédiaire de la cloche 16 et du conduit 14. Le sodium refroidi sortant de l'échangeur 7 par les ouvertures 10 est alors envoyé directement dans le collecteur froid, par l'intermédiaire de la cloche 16 et du conduit 14 (flèches 27). Le sodium refroidi est canalisé par la virole 25 qui permet d'éviter une mise en contact du sodium refroidi dans l'échangeur 7 avec le redan 2, mise en contact qui provoquerait des chocs thermiques brutaux.

Seul le sodium chaud (flèches 28) vient en contact avec le redan.

Pour passer du mode de fonctionnement représenté sur la Fig. 2 au mode de fonctionnement représenté sur la Fig. 1, il suffit d'envoyer de l'argon dans la canalisation 17 et la cloche 16 en ouvrant la vanne 20.

Pour passer d'un mode de fonctionnement à l'autre, les manoeuvres sont donc très simples et très rapides.

Dans le cas où le dispositif de refroidissement de secours est en fonctionnement (Fig. 2), le sodium refroidi est envoyé directement dans le collecteur froid, sans avoir à traverser les échangeurs intermédiaires. Ce sodium refroidi recueilli dans le collecteur froid est envoyé dans la partie inférieure du coeur, travers le coeur de bas en haut en s'échauffant et revient dans le collecteur chaud. Le métal liquide du collecteur 4 pénètre dans l'échangeur 7 par les ouvertures 9 (flèches 29). Le circuit du sodium primaire pendant le refroidissement de secours est donc très simple on constituant une boucle unique avec une partie chaude comportant le coeur et le collecteur chaud et une partie froide comportant le collecteur froid.

Il peut donc fonctionner en convection naturelle. Il en résulte une très bonne efficacité et un très bon rendement du dispositif de refroidissement. En outre, les températures dans les collecteur sont plus uniformes ce qui réduit les contraintes thermiques thermiques locales.

De plus, il est possible de prévoir une virole 12 de grande longueur de sorte que cette virole 12 pénètre profondément à l'intérieur du collecteur froid. Ceci permet d'utiliser un échangeur de secours 7 de longueur accrue et donc de plus faible diamètre. Un tel échangeur est alors d'un coût plus faible, à performances égales.

Par ailleurs, en cas de percement de la cuve principale, le retour du collecteur chaud vers le collecteur froid est assuré naturellement, sans qu'il soit nécessaire d'imposer des contraintes sur le niveau de la fenêtre d'entrée de l'échangeur intermédiaire. Il faut noter enfin que, s'il se produisait un incident au niveau de l'ouverture de la vanne 22, le système n'assurerait plus l'étanchéité entre les deux collecteurs mais fonctionnerait en dispositif de refroidissement, ce qui va dans le sens de la sécurité.

L'invention ne se limite pas au mode de réalisation qui a été décrit.

C'est ainsi qu'on a décrit un seul échangeur associé à un conduit tubulaire traversant le redan et à une cloche solidaire de l'échangeur mais qu'un dispositif de refroidissement suivant l'invention pourra comporter plusieurs échangeurs de secours associés chacun à un conduit traversant le redan et à une cloche vanant coiffer le conduit.

L'invention s'applique à tout réacteur nucléaire à neutrons rapides de type intégré, quelle que soit la forme du redan de sa cuve interne.

## Revendications

1. Réacteur nucléaire à neutrons rapides de type intégré ayant une cuve principale contenant du métal liquide dans lequel est plongé le coeur du réacteur et comportant une paroi séparant le volume interne de la cuve en une zone supérieure recevant le métal liquide chaud ayant traversé le coeur du réacteur, appelée collecteur chaud (4) et une zone inférieure recevant du métal liquide refroidi, appelée collecteur froid (5), cette paroi comportant une partie (2) s'étendant dans la direction radiale de la cuve appelée redan, le réacteur étant pourvu d'un dispositif de refroidissement de secours comportant au moins un échangeur de chaleur (7) plongé dans le collecteur chaud (4) et présentant des ouvertures de sortie (10) de métal liquide refroidi à sa partie inférieure et une virole (25) fixée sur l'enveloppe de l'échangeur de chaleur (7) au-dessus des ouvertures (10) de sortie du métal liquide, caractérisé par le fait qu'il comporte en outre:

—un conduit tubulaire (14) sensiblement vertical traversant le redan (2) à la verticale de l'échangeur (7), dont l'extrémité inférieur débouche dans le collecteur froid (5) et dont l'éxtrémité supérieure débouche dans le collecteur chaud (4), en-dessous de la partie inférieure de l'échangeur (7),

—une cloche (16) fixé sur l'échangeur de chaleur (7) dans le prolongement de sa partie inférieur, ouverte vers le bas et disposée de façon à coiffer la partie supérieure du conduit (14) tout en ménageant un espace libre autour de cette partie supérieure, la virole (25) étant prolongée vers le bas de manière à entourer la cloche (16) sur une partie au moins de sa hauteur et la partie supérieure du conduit tubulaire (14), et

—des moyens (17, 18, 20, 21, 22) de mise en pression de gaz neutre et de dépressurisation du volume intérieur de la cloche (16), permettant de séparer complètement le métal liquide du collecteur chaud (4), du métal liquide du collecteur froid (5), par du gaz neutre sous pression ou de mettre en communication la sortie (10) de métal liquide refroidi de l'échangeur de chaleur (7), avec le collecteur froid (5), par l'intermédiaire de la cloche (16) et du conduit (14).

2. Réaction nucléaire avec un dispositif de refroidissement suivant la revendication 1, caractérisé par le fait que le volume intérieur de la cloche (16) est relié par une canalisation (17) à un réservoir de gaz inerte sous pression (18) disposé à l'extérieur de la cuve du réacteur.

3. Réaction nucléaire avec un dispositif de refroidissement suivant la revendication 2, dans le cas où le métal liquide est du sodium, caractérisé par le fait que le gaz inerte remplissant le réservoir (18) et de l'argon.

4. Réaction nucléaire avec un dispositif de refroidissement suivant la revendication 2, caractérisé par le fait qu'une vanne (20) est disposée sur la canalisation (17) à l'entrée du réservoir (18) et qu'un tube d'échappement (21) sur lequel est placé une vanne (22) est disposée en dérivation sur la canalisation (17).

5. Réaction nucléaire avec un dispositif de refroidissement suivant la revendication 1, caractérisé par le fait que le redan (2) est percé d'une ouverture (11) à la verticale de l'échangeur de chaleur (7), qu'une virole à axe vertical (12) est fixée sur la redan le long de l'ouverture (11), de façon à être saillante vers le bas à l'intérieur du collecteur froid (5) et que le conduit tubulaire (14) est fixé dans l'ouverture centrale d'un fond annulaire (13) solidaire de l'extrémité de la virole (12) opposée à l'ouverture (11) du redan.

6. Réaction nucléaire avec un dispositif de refroidissement suivant la revendication 5, et dans le cas où une virole (25) est solidaire de la partie inférieure de l'échangeur de chaleur (7), caractérisé par le fait que la virole (25) est prolongée vers le bas, à l'intérieur de la virole (12) solidaire du redan et présente un diamètre lévèrement inférieur au diamètre de cette virole (12) solidaire du redan (2).

## Patentansprüche

1. Schneller Neutronenkernreaktor vom integrierten Typ, der einen Hauptbehälter aufweist, der flüssiges Metall enthält, in das der Kern des Reaktors eingetaucht ist, und eine Seitenwand aufweist, die das innere Volumen des Dehälters in eine obere Zone, welche das heiße flüssige Metall aufnimmt, das den Kern des Reaktors durchquert hat, genannt Hießkollektor (4), und in eine untere Zone aufteilt, die das abgekühlte flüssige Metall aufnimmt, genannte Kaltkollektor (5), wobei diese Seitenwand einen Bereich (2) aufweist, der sich in der Radialrichtung des Behälters, genannt Schikane (Redan) erstreckt, wobei der Reaktor mit einer Notkühlvorrichtung versehen ist, die wenigstens einen Wärmetauscher (7) aufweist, der in den Heißkollektor (4) eingetaucht ist, und Ausgangsöffnungen (10) des gekühlten flüssigen Metalls an seinem unteren Bereich und einen Mantel (25) aufweist, der auf der Höhe des Wärmetauschers (7) oberhalb der Ausgangsöffnungen (10) des flüssigen Metalls befestigt ist, dadurch gekennzeichnet, daß er weiterhin aufweist:

—eine im wesentlichen vertikale rohrförmige Leitung (14), welche die Schikane (2) in der Vertikalen des Tauschers (7) durchquert, deren unteres Ende in den Kaltkollektor (5) mündet, und deren oberes Ende in den Heißkollektor (4) unterhalb des unteren Bereiches des Tauschers (7) mündet,

—eine auf dem Wärmetauscher (7) in der Verlängerung seines unteren Bereiches befestigte Glocke (16), die nach unten offen ist, und derart angeordnet ist, daß sie den oberen Bereich der Leitung (14) überdeckt, unter Ausbildung eines Freiraums um diesen oberen Bereich, wobei der Mantel (25) nach unten derart verlängert ist, daß er die Glocke (16) wenigstens auf einem Teil ihrer Höhe und dem oberen Bereich der rohrförmigen Leitung (14) umgibt, und

—Einrichtungen (17, 18, 20, 21, 22) des Unter-Druck-Setzen mit neutralem Gas und des Entspannens des inneren Volumens der Glocke (16), was erlaubt das flüssige Metall des Heißkollektors (4) vom flüssigen Metall des Kaltkollektors (5) durch das neutrale Gas unter Druck vollständig zu trennen, oder den Ausgang (10) des gekühlten flüssigen Metalls des Wärmetauschers (7) mit dem Kaltkollektor (5) mittels der Glocke (16) und der Leitung (14) in Verbindung zu setzen.

2. Kernreaktor mit einer Kühlvorrichtung nach Anspruch 1, dadurch gekennzeichnet, daß das innere Volumen der Glocke (16) über eine Kanalisation (17) mit einem Reservoir von inertem Druckgas (18) verbunden ist, das außerhalb des Reaktobehälters angeordnet ist.

3. Kernreaktor mit einer Kühlvorrichtung nach Anspruch 2, in dem Fall wo das flüssige Metall Natrium ist, dadurch gekennzeichnet, daß das inerte Gas, daß das Reservoir (18) füllt, Argon ist.

4. Kernreaktor mit einer Kühlvorrichtung nach Anspruch 2, dadurch gekennzeichnet, daß ein Ventil (20) auf der Kanalisation (17) am Eingang des Reservoirs (18) angeordnet ist, und daß ein Auslaßrohr (21), auf dem ein Ventil (22) angeordnet ist, zur Umleitung auf der Kanalisation (17) angeordnet ist.

5. Kernreaktor mit einer Kühlvorrichtung nach Anspruch 1, dadurch gekennzeichnet, daß die Schikane (Redan) (2) mit einer Öffnung (11) in der Vertikalen des Wärmetauschers (7) durchsetzt ist, daß ein Mantel (12) mit vertikaler Achse auf der Schikane entlang der Öffnung (11) befestigt ist, derart, daß er nach unten in das innere des Kaltkollektors (5) vorspringt, und daß die rohrförmige Leitung (14) in der Mittenöffnung eines ringförmigen Boden (13) befestigt ist, der mit dem Ende des Mantels (12) gegenüberliegend der Öffnung (11) der Schikane verbunden ist.

6. Kernreaktor mit einer Kühlvorrichtung nach Anspruch 5, und in dem Fall, wo ein Mantel (25) mit dem unteren Bereich des Wärmetauschers (7) verbunden ist, dadurch gekennzeichnet, daß der Mantel (25) nach unten in das innere des Mantels (12) verlängert ist, der mit der Schikane verbunden ist, und einen Durchmesser aufweist, der geringfügig geringer ist als der Durchmesser dieses Mantels (12), der mit der Schikane (2) verbunden ist.

**Claims**

1. A fast neutron nuclear reactor of integrated type having a main vessel containing liquid metal in which the reactor core is immersed and comprising a wall dividing the inner space of the vessel into an upper region receiving the hot liquid metal which has passed through the reactor core, known as the hot header (4), and a lower region receiving the cooled liquid metal known as the cold header (5), this wall comprising a part (2) extending in the radial direction of the vessel, called the stepped wall, the reactor being provided with an emergency cooling device comprising at least one heat exchanger (7) immersed in the hot header (4) and having outlet openings (10) for cooled liquid metal in its lower part, and a collar (25) fixed to the casing of the heat exchanger (7) above the outlet openings for cooled liquid metal, characterized in that it additionally comprises:

a substantially vertical tubular conduit (14) passing through the stepped wall (2) vertically below the exchanger (7), the lower end of which opens into the cold header (5) and the upper end of which opens into the hot header (4), below the lower part of the exchanger (7),

a bell (16) fixed to the heat exchanger (7) on an extension of its lower part, open at the bottom and arranged so as to surmount the top part of the conduit (14) while defining a free space around this top part, the collar (25) being extended downwards so as to surround the bell (16) over at least a part of its height and the upper part of the tubular conduit (14),

and means (17, 18, 20, 21, 22) for compressing inert gas and for relieving the pressure in the inner space of the bell (16), making it possible to separate the liquid metal in the hot header (4) completely from the liquid metal in the cold header (5), by means of compressed inert gas, or to bring the outlet (10) for cooled liquid metal of the heat exchanger (7) into communication with the cold header (5) by means of the bell (16) and conduit (14).

2. A nuclear reactor having a cooling device according to claim 1, characterized in that the inner space of the bell (16) is connected by a pipeline (17) to a storage tank for compressed inert gas (18) disposed outside the reactor vessel.

3. A nuclear reactor having a cooling device according to claim 2 where the liquid metal is sodium, characterized in that the inert gas filling the storage tank (18) is argon.

4. A nuclear reactor having a cooling device according to claim 2, characterized in that a valve (20) is disposed in the pipeline (17) at the entry of the storage tank (18) and that a vent pipe (21), in which a valve (22) is placed branches off the pipeline (17).

5. A nuclear reactor having a cooling device according to claim 1, characterized in that the stepped wall (2) is pierced with an opening (11) vertically below the heat exchanger (7), that a collar with a vertical axis (12) is fixed on the stepped wall along the opening (11), so as to project downwards inside the cold header (5) and that the tubular conduit (14) is fixed in the central opening of an annular bottom (13) forming an integral part of the end of the collar (12) opposite the opening (11) in the stepped wall.

6. A nuclear reactor having a cooling device according to claim 5, where a collar (25) is integral with the lower part of the heat exchanger (7), characterized in that the collar (25) is extended downwards, inside the collar (12) forming an integral part of the stepped wall, and has a diameter which is slightly smaller than the diameter of this collar (12) forming an integral part of the stepped wall (2).

FIG.1

FIG.2

EP 0 258 131 B1